# EUROPÄISCHE PATENTSCHRIFT

(11) **EP 3 405 773 B1**
(45) Veröffentlichungstag und Bekanntmachung des Hinweises auf die Patenterteilung: **10.08.2022**
(21) Anmeldenummer: 17702526.9
(22) Anmeldetag: 04.01.2017
(51) Int. Cl.: G01N 17/00

(54) **KLIMAPRÜFGERÄT**
CLIMATE-TESTING DEVICE
APPAREIL POUR ESSAIS CLIMATIQUES

(30) Priorität: 18.01.2016 DE 102016200538
(43) Veröffentlichungstag der Anmeldung: 28.11.2018
(73) Patentinhaber: Weiss Technik GmbH, 35447 Reiskirchen (DE)
(72) Erfinder: WEPPLER, Michael, 35305 Grünberg (DE)
(74) Vertreter: advotec.
(86) Internationale Anmeldenummer: PCT/EP2017/050114
(87) Internationale Veröffentlichungsnummer: WO 2017/125262

(56) Entgegenhaltungen:
- CN-A- 103 439 246
- CN-U- 204 107 520
- DE-A1-102009 004 822
- US-A1- 2014 124 468

## Beschreibung

Die Erfindung betrifft ein Klimaprüfgerät und einen Klimaprüfgerätebausatz zur Ausbildung eines Klimaprüfgerätes, insbesondere Korrosionsprüfgerät oder dergleichen, umfassend ein Prüfkammermodul mit einem gegenüber einer Umgebung abschließbaren Prüfraum zur Aufnahme von Prüflingen, ein Tankmodul mit einem Behälter zur Aufnahme einer korrosiven Flüssigkeit, ein Steuermodul mit einer Steuerung zur Durchführung eines Prüfzyklus, und eine Gehäuseanordnung zur zumindest teilweisen Aufnahme des Prüfraums, des Behälters und der Steuerung.

Derartige Klimaprüfgeräte oder auch Korrosionsprüftruhen werden regelmäßig zur Korrosionsprüfung von Produkten bzw. Prüflingen genutzt. Dabei werden die Prüflinge in einem gegenüber einer Umgebung dicht abschließbaren Prüfraum einer korrosiven Flüssigkeit, beispielsweise einer Salzlauge, ausgesetzt. Die korrosive Flüssigkeit wird dabei in Art eines Sprühnebels auf die Prüflinge abgeschieden. Weiter ist der Prüfraum regelmäßig auch beheizbar, sodass in dem Prüfraum hinsichtlich Lufttemperatur und relativer Luftfeuchte definierte klimatische Bedingungen ausgebildet werden können.

Die korrosive Flüssigkeit wird regelmäßig in einem Behälter des Klimaprüfgerätes bevorratet und während eines Prüfzyklus in den Prüfraum in der erforderlichen Menge gefördert. Der Prüfraum verfügt über einen Ablauf, über den kondensierte und abtropfende Flüssigkeit aus dem Prüfraum ausgeleitet werden kann. Darüber hinaus umfasst das Klimaprüfgerät eine Steuerung zur vorbestimmten Durchführung eines Prüfzyklus. Die Steuerung umfasst gegebenenfalls einen Schaltschrank mit einer Spannungsversorgung, eine Steuereinrichtung zum Ansprechen von Gerätekomponenten und Auslesen von Sensoren, Mittel zur Datenverarbeitung sowie eine Bedieneinrichtung zur manuellen Bedienung des Klimaprüfgerätes.

Bei den bekannten Klimaprüfgeräten sind der Prüfraum, der Behälter und die Steuerung innerhalb eines Gehäuses des Klimaprüfgerätes angeordnet. Den größten Raum im Gehäuse nimmt dabei der Prüfraum ein, der in Art einer Wanne oder Truhe mit einem Prüfraumdeckel verschließbar ausgebildet ist. Die Steuerung bzw. deren Komponenten können am Prüfraum möglichst platzsparend angeordnet sein. Auch kann der Behälter eine Form aufweisen, die an eine Gestalt des Prüfraums angepasst bzw. angeformt ist. Beispielsweise kann der Behälter sich seitlich und unterhalb des Prüfraums an diesen anschmiegen. Dadurch wird es möglich, möglichst kurze Leitungswege zwischen dem Prüfraum und dem Behälter sowie den Komponenten der Steuerung auszubilden. Beispielsweise können Einzelkomponenten der Steuerung an unterschiedlichsten Stellen innerhalb des Gehäuses, die mit der jeweiligen Einzelkomponente in Beziehung stehen oder einfach nur einen freien Bauraum darstellen, angeordnet sein. Dadurch kann eine besonders kompakte Bauweise des Klimaprüfgerätes erreicht werden. Da derartige Klimaprüfgeräte auch in unterschiedlichen Größen bzw. mit verschiedenen Prüfraumgrößen hergestellt werden, ist stets eine an eine jeweilige Größe angepasste Montage der Einzelkomponenten erforderlich. Weiter sind ein Gehäuse, eine Steuerung und gegebenenfalls ein Behälter stets an eine Prüfraumgröße anzupassen. Eine Herstellung und Montage von Klimaprüfgeräten in verschiedenen Größen ist somit aufwendig.

Die DE 10 2009 004 822 A1 betrifft eine Korrosionsprüftruhe, insbesondere für Salzsprühnebeltests, aus einem Gehäuse mit einem Prüfraum mit Boden und Seitenwänden und mit einem in geschlossenem Zustand auf den freien Stirnseiten der Seitenwände aufliegenden Deckel.

Die US 2014/0124468 A1 bezieht sich auf Konsolenmodule und modulare Konsolensysteme, die mindestens zwei Konsolenmodule umfassen.

Aufgabe der Erfindung ist es daher, ein Klimaprüfgerät sowie einen Klimaprüfgerätebausatz vorzuschlagen, das bzw. der eine kostengünstige Herstellung von Klimaprüfgeräten ermöglicht.

Diese Aufgabe wird durch ein Klimaprüfgerät mit den Merkmalen des Anspruchs 1 und einen Klimaprüfgerätebausatz mit den Merkmalen des Anspruchs 15 gelöst.

Das erfindungsgemäße Klimaprüfgerät, insbesondere Korrosionsprüfgerät oder dergleichen, umfasst ein Prüfkammermodul mit einem gegenüber einer Umgebung abschließbaren Prüfraum zur Aufnahme von Prüflingen, ein Tankmodul mit einem Behälter zur Aufnahme einer korrosiven Flüssigkeit, ein Steuermodul mit einer Steuerung zur Durchführung eines Prüfzyklus, und eine Gehäuseanordnung zur zumindest teilweisen Aufnahme des Prüfraums, des Behälters und der Steuerung, wobei das Klimaprüfgerät eine Rahmenanordnung umfasst, wobei die Rahmenanordnung aus voneinander beabstandeten parallelen Rahmenträgern und Rahmenprofilen ausgebildet ist, wobei die Rahmenprofile die Rahmenträger miteinander verbinden, wobei die Rahmenprofile und die Rahmenträger räumlich getrennte Modulaufnahmen für jeweils den Prüfraum, den Behälter und die Steuerung ausbilden.

Dadurch, dass das Klimaprüfgerät eine Rahmenanordnung umfasst, wird es möglich, den Prüfraum und die Steuerung vollständig getrennt voneinander in jeweils von der Rahmenanordnung ausgebildeten Rahmenabschnitten anzuordnen. Die Rahmenanordnung besteht aus Rahmenträgern und Rahmenprofilen, wobei die Rahmenträger quer bzw. orthogonal zu einer Längserstreckung des Klimaprüfgerätes und die Rahmenprofile in Richtung dieser Längserstreckung angeordnet sind. Die Rahmenprofile verbinden die Rahmenträger miteinander und beabstanden diese derart voneinander, dass zwischen den Rahmenträgern die Rahmenabschnitte bzw. Modulaufnahmen zur Aufnahme des Prüfraums, des Behälters oder der Steuerung ausgebildet werden. Durch die Ausbildung dieser Modulaufnahmen und die damit mögliche räumliche Trennung von Prüfraum, Behälter und Steuerung ergibt sich ein modularer Aufbau des Klimaprüfgerätes, wodurch das Klimaprüfgerät einfacher und kostengünstiger herstellbar wird. Die Rahmenanordnung kann den Prüfraum, den Behälter, die Steuerung und/oder die Gehäuseanordnung haltern. So wird dann durch die Rahmenanordnung nicht nur eine Trennung von Prüfraum, Behälter und Steuerung möglich, sondern die Rahmenanordnung kann auch zur Montage des Prüfraums, des Behälters und der Steuerung sowie der Gehäuseanordnung dienen. So kann beispielsweise der Prüfraum in die dafür ausgebildete Modulaufnahme eingesetzt und montiert werden, wobei eine Last des Prüfraums über die Rahmenanordnung abgetragen werden kann. Gleichzeitig kann die Rahmenanordnung als eine Montagebasis für die Gehäuseanordnung dienen. Die Gehäuseanordnung kann demnach die Rahmenanordnung vollständig abdecken.

Ferner ist der Rahmenträger aus einem Kunststoffmaterial einstückig ausgebildet. Der Rahmenträger ist dann besonders unempfindlich gegenüber der korrosiven Flüssigkeit, wie beispielsweise Salzlauge. Die einstückige Ausbildung kann durch Spritzpressen des Kunststoffmaterials (RTM-Verfahren) besonders kostengünstig erfolgen.

Überdies ist der Rahmenträger aus vertikalen Trägern und horizontalen Trägern ausgebildet. Die vertikalen Träger und die horizontalen Träger können dann einen rechteckigen oder quadratischen Rahmen ausbilden. Dabei kann vorgesehen sein, dass die vertikalen Träger und die horizontalen Träger durch Querverstrebungen verbunden sind, sodass der Rahmenträger noch stabiler ausgebildet ist.

Schließlich sind in den Trägern Durchgangsöffnung bzw. Gefache ausgebildet, wobei in zumindest einer Durchgangsöffnung ein Rahmenprofil formschlüssig eingesetzt ist. Vorzugsweise weist jeder Rahmenträger wenigstens vier Durchgangsöffnungen auf, in die ein Rahmenprofil einsetzbar ist. Vorteilhaft ist ein Querschnitt der Durchgangsöffnungen dann an einen Querschnitt des Rahmenprofils angepasst, sodass das Rahmenprofil formschlüssig durch die Durchgangsöffnungen hindurchtritt. Die Träger können noch eine Vielzahl weiterer Durchgangsöffnungen bzw. Gefache aufweisen, die in ihren Abmessungen an eine Durchführung von Kabeln, Schläuchen und sonstigen Kanälen angepasst sind. Dadurch wird es möglich, die Rahmenträger als integralen Bestandteil des Klimaprüfgerätes und als Montagehilfe zu nutzen.

Die Rahmenträger sind derart angeordnet, dass die Rahmenträger den Prüfraum, den Behälter und die Steuerung räumlich voneinander trennen. Die räumliche Trennung ermöglicht eine flexible Herstellung von Klimaprüfgeräten in Ausführungsformen, bei denen der Prüfraum, der Behälter und die Steuerung hinsichtlich ihrer Größe voneinander unabhängig ausgebildet werden können. So ist es beispielsweise möglich, einen jeweils baugleichen Behälter und eine Steuerung für jeweils unterschiedliche Größen von Prüfräumen zu verwenden und unabhängig voneinander zu montieren. Auch kann eine Größe des Klimaprüfgerätes einfach dadurch bestimmt werden, dass die Rahmenprofile entsprechend der Größe des jeweiligen Prüfraums, Behälters oder der Steuerung in ihrer Länge ausgebildet werden. So ist es zur Ausbildung der Rahmenanordnung dann lediglich erforderlich, die Rahmenträger in ihrem an den Prüfraum, den Behälter und die Steuerung angepassten Relativabstand anzuordnen und mit den Rahmenprofilen zu verbinden. Dabei ist insbesondere vorgesehen, für alle Ausführungsformen des Klimaprüfgerätes stets die gleichen Rahmenträger und Rahmenprofile zu verwenden. Insgesamt kann so eine Teileanzahl für eine Serie von unterschiedlich großen Klimaprüfgeräten wesentlich verringert werden.

Der Rahmenträger kann auch einen Schaumkern aufweisen und/oder das Kunststoffmaterial kann faserverstärkt sein. Der Schaumkern kann ein PU-Schaumkern sein und zur thermischen Isolation des Rahmenträgers dienen. Durch die Faserverstärkung des Kunststoffmaterials ist der Rahmenträger besonders stabil und kann filigran ausgebildet werden.

So kann der Rahmenträger als ein Fachwerk ausgebildet sein. Der Rahmenträger kann demnach eine Vielzahl von Stäben aufweisen, die miteinander fest verbunden sind. Dadurch wird der Rahmenträger besonders stabil und kann gleichzeitig mit einem vergleichsweise geringen Gewicht ausgebildet werden.

An einem Träger können Fußfortsätze angeformt sein, wobei an den Fußfortsätzen jeweils eine Einstelleinrichtung zur horizontalen Ausrichtung der Rahmenanordnung angeordnet sein kann. Die Fußfortsätze sind vorzugsweise an einer Unterseite der Rahmenträger angeformt, sodass eine Aufstellung des Klimaprüfgerätes auf einem Untergrund erleichtert wird. Auch kann dann die gesamte Last des Klimaprüfgerätes über die jeweiligen Fußfortsätze abgetragen werden. Die Einstelleinrichtung kann beispielsweise ein Einsatz innerhalb eines Fußfortsatzes sein, der mittels eines Schraubgewindes in den Fußfortsatz hineindrehbar oder herausdrehbar ist. Der Einsatz kann dann als ein höhenverstellbarer Fuß dienen. So ist es möglich, das Klimaprüfgerät auf beispielsweise unebenen oder abfallenden Untergründen horizontal ausgerichtet aufzustellen. Auch wird eine Montage des Klimaprüfgerätes durch die Fußfortsätze weiter erleichtert, da nicht erst Füße unter einem Gehäuse des Klimaprüfgerätes montiert werden müssen.

Das Rahmenprofil kann ein Metall-Strangpressprofil sein. Beispielsweise kann das Rahmenprofil ein Aluminium-Strangpressprofil sein, welches mit nahezu beliebigen Querschnitten in erforderlichen Längen kostengünstig erhältlich ist. Ein Querschnitt des Strangpressprofils kann dabei so ausgebildet sein, dass der Querschnitt im Wesentlichen quadratisch oder rechteckig ist und an seinen Seitenflächen Montagenuten zur Aufnahme von Schraubenköpfen oder dergleichen aufweist. Die Rahmenprofile können dann mit dem Rahmenträger durch Verschrauben oder Klemmen besonders einfach montiert werden.

Die Gehäuseanordnung kann Gehäuseplatten umfassen, die an den Rahmenträgern befestigt sein können, wobei die Gehäuseplatten in ihren Abmessungen an die Abmessungen der Modulaufnahmen angepasst sein können. So ist es nicht mehr erforderlich, für Klimaprüfgeräte unterschiedlicher Größe jeweils unterschiedliche Gehäuse herzustellen, sondern lediglich unterschiedlich große Gehäuseplatten für die jeweiligen Modulaufnahmen. Auch wird dadurch das Gehäuse bzw. die Gehäuseanordnung des Klimaprüfgerätes modular aufgebaut und somit variabler und kostengünstiger herstellbar. Insbesondere ist es auch dann möglich, zu Montage- oder Revisionszwecken nur die jeweilige Gehäuseplatte einer Modulaufnahme zu entfernen, die für beispielsweise eine Wartungsaufgabe entfernt werden muss.

Vorteilhaft kann die Gehäuseplatte einen Schaumkern aufweisen. Insbesondere die Gehäuseplatten des Prüfkammermoduls können einen Schaumkern aufweisen, der die Prüfkammer thermisch isoliert. Die Gehäuseplatte kann ebenfalls durch Spritzpressen hergestellt sein.

Eine Befestigung der Gehäuseplatten an den Rahmenträger wird besonders einfach, wenn in der Gehäuseplatte Befestigungsmittel formschlüssig eingelassen sind, und wenn an dem Rahmenträger Befestigungsaufnahmen für die Befestigungsmittel ausgebildet sind. Bei einer Herstellung der Gehäuseplatte können die Befestigungsmittel beispielsweise einfach in eine Form der Gehäuseplatte eingelegt und somit in der Gehäuseplatte eingelassen werden. Die Befestigungsmittel können Scharniere oder auch bolzenförmige Vorsprünge sein, die in übereinstimmend ausgebildete Befestigungsaufnahmen bzw. -ausnehmungen in den Rahmenträger eingreifen oder mit diesem verrasten können. Eine besondere Montage der Befestigungsmittel an der Gehäuseplatte, beispielsweise durch Verschrauben, ist dann auch nicht mehr erforderlich. Auch kann dann eine Außenfläche der Gehäuseplatte besonders eben und damit gut zu reinigen ausgebildet werden.

Der Prüfraum kann als eine Wanne oder Truhe mit einem verschließbaren Prüfraumdeckel ausgebildet sein. Der Prüfraumdeckel kann dabei Teil der Gehäuseanordnung sein oder auch ergänzend mit einer Gehäuseplatte, die der Form des Prüfraumdeckels angepasst ist, abgedeckt sein. Die Wanne oder Truhe kann aus einem Kunststoffmaterial ausgebildet sein, wobei auf der Wanne oder Truhe der Prüfraumdeckel dichtend aufliegen kann. Die Wanne oder Truhe kann dann von einer Oberseite her mit Prüflingen befüllt werden, wobei an einer Unterseite der Wanne oder der Truhe ein Ablauf für die korrosive Flüssigkeit vorgesehen sein kann.

Die Wanne oder Truhe kann auch Lagerfortsätze aufweisen, die auf den Rahmenprofilen aufliegen können. So können die Rahmenprofile so an den Rahmenträgern angeordnet sein, dass sie unterhalb der Wanne oder Truhe verlaufen. Die Lagerfortsätze können an der Wanne oder Truhe angeformt sein, sodass die Wanne oder Truhe unmittelbar auf den Rahmenprofilen aufliegen kann. Hierdurch wird eine Montage der Wanne oder Truhe erheblich vereinfacht, da keine besonderen Befestigungsmittel oder Mittel zum Abtragen einer Last der Wanne oder Truhe verwendet werden müssten.

Der Behälter kann Rollen aufweisen, wobei der Behälter dann mittels der Rollen auf einem Untergrund fahrbar sein kann. Beispielsweise kann der Behälter drei bis vier Rollen aufweisen und mittels der Rollen in das Klimaprüfgerät hinein oder heraus bewegt werden. Eine korrosive Flüssigkeit kann dann außerhalb des Klimaprüfgerätes bzw. an einem vom Aufstellort des Klimaprüfgerätes entfernten Ort aufbereitet und in den Behälter gefüllt werden. Ein gesonderter Transport von korrosiver Flüssigkeit zu dem Klimaprüfgerät, beispielsweise in Kanistern mit einem anschließenden Befüllen eines ortsfesten Behälters, ist dann nicht mehr erforderlich. Die Modulaufnahme des Behälters kann dann so ausgebildet sein, dass ein Rahmenprofil zwischen zwei Rahmenträgern derart ausgespart ist, dass der Behälter zwischen die beiden Rahmenträger in das Klimaprüfgerät hinein geschoben werden kann.

Das Steuermodul kann allein an einem Rahmenträger befestigt und um eine Hochachse zumindest in Teilen schwenkbar ausgebildet sein. Folglich muss das Steuermodul bzw. die Steuerung nicht zwangsläufig zwischenliegend zweier Rahmenträger angeordnet sein, sondern es ist ausreichend, das Steuermodul an allein einem Rahmenträger zu befestigen. Um einen leichten Zugang zu der Steuerung bzw. einem Schaltschrank zu ermöglichen, ist es vorteilhaft, wenn das Steuermodul an dem Rahmenträger schwenkbar befestigt ist. Beispielsweise kann das gesamte Steuermodul mittels Scharnieren an dem Rahmenträger befestigt sein, sodass eine Öffnung der Steuerung durch Aufklappen bzw. Verschwenken des Steuermoduls möglich ist. Alternativ kann vorgesehen sein, das Steuermodul nur teilweise schwenkbar auszubilden, beispielsweise durch eine feste Montage eines Schaltschranks des Steuermoduls an dem Rahmenträger oder an den Rahmenprofilen, wobei dann Teile der Steuerung schwenkbar an den Rahmenprofilen bzw. dem Schaltschrank ausgebildet sein können. So wird eine Montage und Wartung durch eine verbesserte Zugänglichkeit der Steuerung vereinfacht. Eventuelle Bedienelemente einer Bedieneinrichtung der Steuerung können oberhalb des verschwenkbaren Teils der Steuerung fest angeordnet sein.

Der erfindungsgemäße Klimaprüfgerätebausatz zur Ausbildung eines Klimaprüfgerätes nach der Erfindung umfasst ein Prüfkammermodul mit einem Prüfraum, ein Tankmodul mit einem Behälter, ein Steuermodul mit einer Steuerung, drei Rahmenträger und vier Rahmenprofile, wobei eine Länge der Rahmenträger so bemessen ist, dass der Prüfraum und der Behälter jeweils zwischen Rahmenträgern anordbar ist, wobei die Steuerung an einem Rahmenträger anordbar ist.

So ist es möglich, mit allein drei Rahmenträgern und vier Rahmenprofilen Klimaprüfgeräte in beliebigen Längen herzustellen. Die Anpassung an eine jeweilige Länge erfolgt durch einfaches Ablängen von vier Rahmenprofilen gleichen Querschnitts. Zu den Vorteilen des erfindungsgemäßen Klimaprüfgerätebausatzes wird auf die Vorteilsbeschreibung des erfindungsgemäßen Klimaprüfgerätes verwiesen.

Weitere Ausführungsformen eines Klimaprüfgerätebausatzes ergeben sich aus den auf den Vorrichtungsanspruch 1 rückbezogenen Unteransprüchen.

Nachfolgend werden verschiedene Ausführungsformen eines Klimaprüfgerätes unter Bezugnahme auf die beigefügten Zeichnungen näher erläutert.

Es zeigen:
- **Fig. 1**: eine erste Ausführungsform eines Klimaprüfgerätes in einer perspektivischen Darstellung;
- **Fig. 2**: eine zweite Ausführungsform eines Klimaprüfgerätes in einer perspektivischen Darstellung;
- **Fig. 3**: das Klimaprüfgerät aus **Fig. 2** in einer Draufsicht;
- **Fig. 4**: das Klimaprüfgerät aus **Fig. 2** in einer Vorderansicht;
- **Fig. 5**: das Klimaprüfgerät aus **Fig. 2** in einer Seitenansicht von rechts;
- **Fig. 6**: eine Rahmenanordnung des Klimaprüfgerätes aus **Fig. 2** in einer perspektivischen Darstellung;
- **Fig. 7**: einen Rahmenträger der Rahmenanordnung aus **Fig. 6** in einer Seitenansicht;
- **Fig. 8**: den Rahmenträger in einer Vorderansicht;
- **Fig. 9**: das Klimaprüfgerät aus **Fig. 2** in einer Querschnittansicht;
- **Fig. 10**: das Klimaprüfgerät aus **Fig. 2** in einer vertikalen Längsschnittansicht;
- **Fig. 11**: das Klimaprüfgerät aus **Fig. 2** in einer horizontalen Längsschnittansicht.

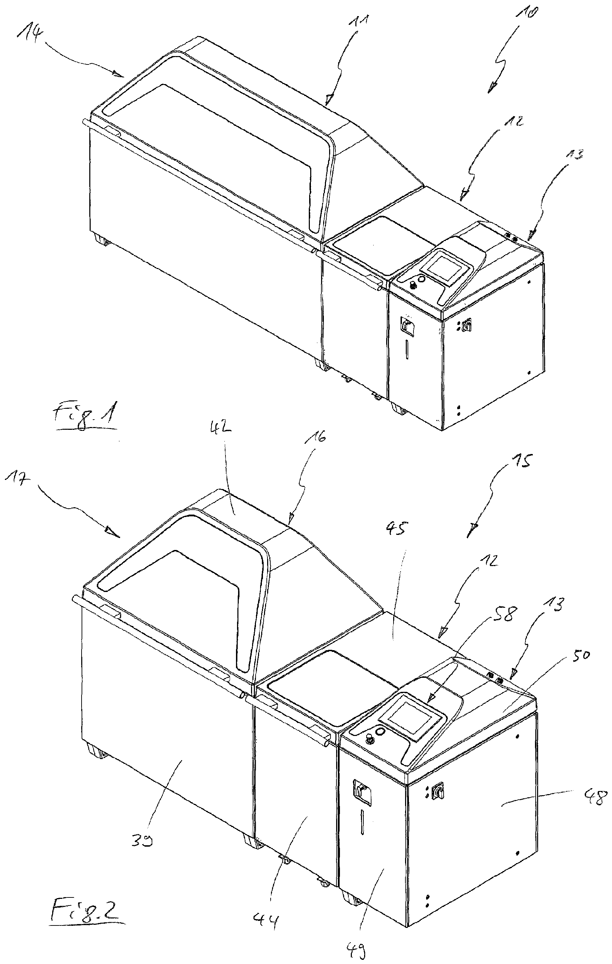

Die **Fig. 1** zeigt eine erste Ausführungsform eines Klimaprüfgerätes 10, umfassend ein Prüfkammermodul 11, ein Tankmodul 12 und ein Steuermodul 13. Ein hier nicht dargestellter Prüfraum ist unter einer Gehäuseanordnung 14 des Klimaprüfgerätes verborgen. Die **Fig. 2** zeigt eine zweite Ausführungsform eines Klimaprüfgerätes 15 mit einem Prüfkammermodul 16 und dem Tankmodul 12 sowie dem Steuermodul 13. Auch hier ist ein zunächst nicht dargestellter Prüfraum unter einer Gehäuseanordnung 17 des Klimaprüfgerätes 15 verborgen. Im Unterschied zum Klimaprüfgerät aus **Fig. 1** ist beim Klimaprüfgerät 15 das Prüfkammermodul 16 vergleichsweise kürzer ausgebildet, wobei das Tankmodul 12 und das Steuermodul 13 im Wesentlichen identisch sind.

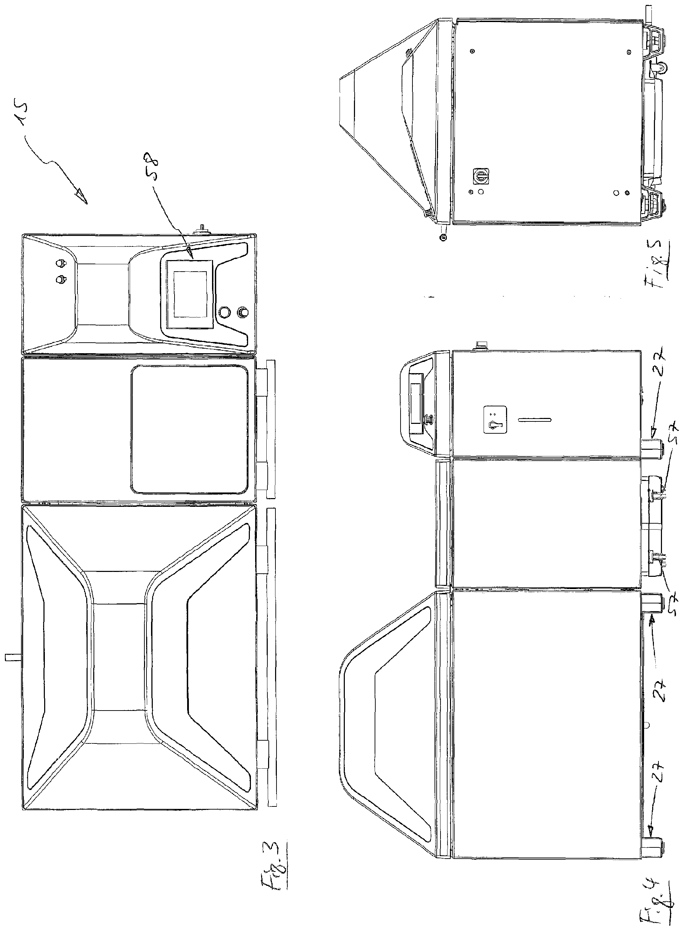

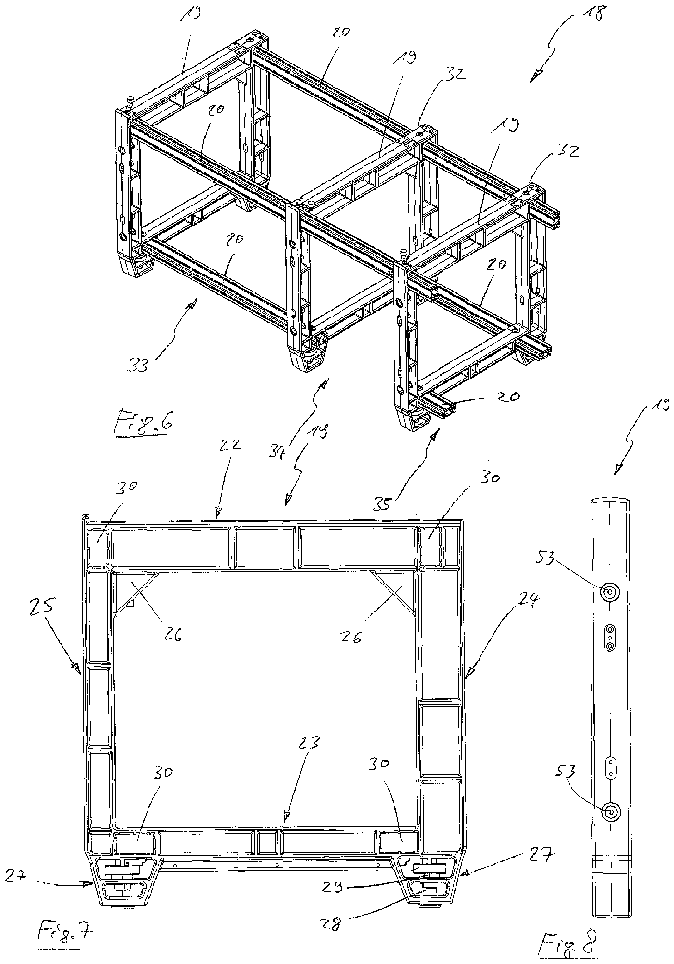

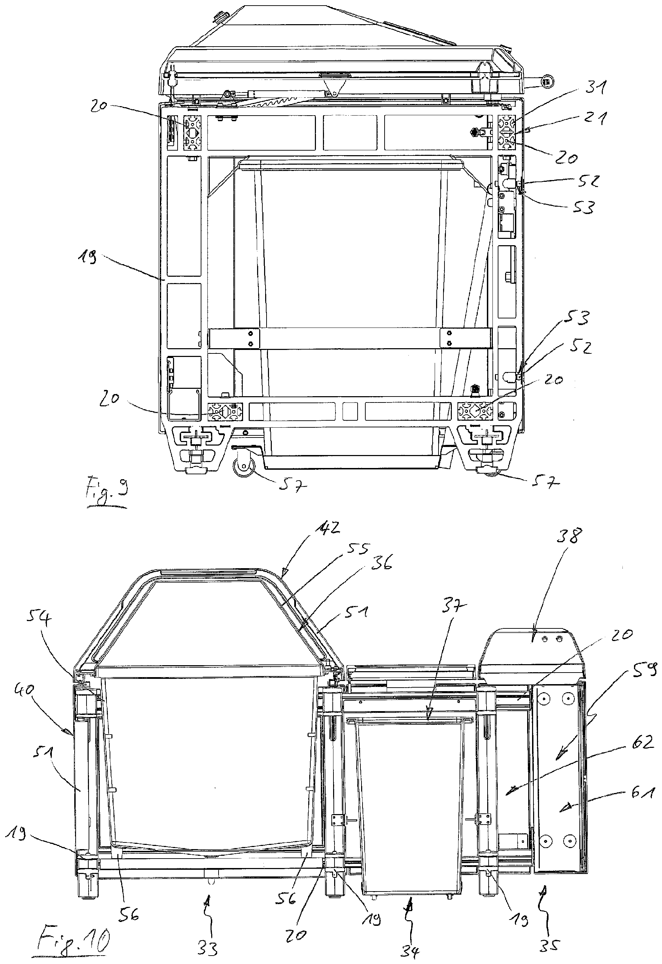

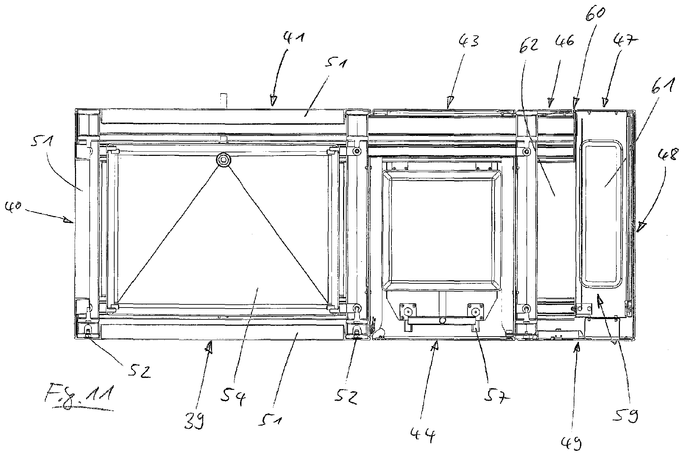

Eine Zusammenschau der **Fig. 3** bis **11** zeigt das Klimaprüfgerät 15 in verschiedenen Ansichten und Darstellungen. Das Klimaprüfgerät 15 umfasst eine Rahmenanordnung 18, die aus jeweils übereinstimmend ausgebildeten Rahmenträgern 19 und Rahmenprofilen 20 mit übereinstimmenden Querschnitten 21 ausgebildet ist. Die Rahmenträger 19 sind aus faserverstärktem Kunststoffmaterial durch Spritzpressen einstückig ausgebildet. Der Rahmenträger 19 weist einen oberen horizontalen Träger 22, einen unteren horizontalen Träger 23, einen vorderen vertikalen Träger 25 und einen hinteren vertikalen Träger 24 auf. Streben 26 verstärken eine Verbindung des oberen horizontalen Trägers 22 mit dem vorderen vertikalen Träger 25 bzw. dem hinteren vertikalen Träger 24. An dem unteren horizontalen Träger 23 sind Fußfortsätze 27 angeformt. In die Fußfortsätze 27 sind jeweils Einstellelemente 28 mit einem hier nicht ersichtlichen Schraubgewinde und einer Mutter 29 eingesetzt. Ein Drehen der Mutter 29 bewirkt dann eine translatorische Bewegung des Einstellelements 28 aus dem Fußfortsatz 27 heraus oder herein, sodass die Rahmenanordnung 18 horizontal auf einem Untergrund positioniert werden kann.

Der Rahmenträger 19 weist weiter Durchgangsöffnungen 30 auf, die an den Querschnitt 21 der Rahmenprofile 20 so angepasst sind, dass die Rahmenprofile 20 durch die Durchgangsöffnungen 30 hindurch geschoben werden können und gleichzeitig von dem Rahmenträger 19 formschlüssig umgeben sind. Die Rahmenprofile 20 weisen Längsnuten 31 auf, in die Befestigungsmittel 32 einsetzbar sind. Die Rahmenträger 19 können dann mittels der Befestigungsmittel 32 mit den Rahmenprofilen 20 verschraubt werden. Die Rahmenträger 19 und die Rahmenprofile 20 werden so miteinander verbunden, dass die Rahmenträger 19 derart voneinander beabstandet sind, dass räumlich getrennte Modulaufnahmen 33, 34, 35 für einen Prüfraum 36 des Prüfkammermoduls 16, für einen Behälter 37 des Tankmoduls 12 und für eine Steuerung 38 des Steuermoduls 13 ausgebildet werden. Der Prüfraum 36 und der Behälter 37 sind dabei jeweils zwischenliegend Rahmenträgern 19 angeordnet, wobei die Steuerung 38 an lediglich einem Rahmenträger 19 angeordnet ist.

Die Gehäuseanordnung 17 ist aus einer Mehrzahl von Gehäuseplatten 39 bis 50 ausgebildet, die den Prüfraum 36, den Behälter 37 und die Steuerung 38 zumindest teilweise abdecken. Insbesondere die Gehäuseplatten 39 bis 42 sind mit einem Schaumkern 51 ausgebildet, sodass eine zusätzliche Isolierung des Prüfraums 36 geschaffen wird. Die Gehäuseplatten 39 bis 50 sind an den Rahmenträgern 19 befestigt. Wie hier am Beispiel der Gehäuseplatte 39 dargestellt, weist die Gehäuseplatte 39 Befestigungsbolzen 52 auf, die in der Gehäuseplatte 39 eingelassen sind. In dem Rahmenträger 19 sind übereinstimmend ausgebildete Befestigungsaufnahmen 53 ausgebildet, in die die Befestigungsbolzen 52 eingesteckt werden können. So kann eine einfache Befestigung der Gehäuseplatte 39, die eine leichte Montage und Demontage ermöglicht, geschaffen werden.

Der Prüfraum 36 ist durch eine Wanne 54 ausgebildet, die mit einem Prüfraumdeckel 55 dicht verschlossen ist. Innerhalb des Prüfraums 36 bzw. der Wanne 54 mit dem Prüfraumdeckel 55 wird eine nicht dargestellte korrosive Flüssigkeit auf ebenfalls nicht dargestellte Prüflinge abgeschieden. Die Wanne 54 ist aus einem Kunststoffmaterial ausgebildet und verfügt über angeformte Füße 56, die unmittelbar auf zwei Rahmenprofilen 20 aufliegen. So wird insbesondere eine einfache Montage der Wanne 54 ermöglicht.

Der Behälter 37 ist mit Rollen 57 ausgestattet, sodass der Behälter 37 leicht über einen hier nicht dargestellten Untergrund bewegt werden kann. Der Behälter 37 dient zur Bevorratung der korrosiven Flüssigkeit. Damit der Behälter 37 in die Modulaufnahme 34 eingeschoben werden kann, ist eines der Rahmenprofile 20 im Bereich der Modulaufnahme 34 ausgespart bzw. unterbrochen ausgebildet. Eine Entnahme bzw. Handhabung des Behälters 37 kann durch Öffnung der Gehäuseplatten 44 und 45 erfolgen.

Die Steuerung 38 umfasst eine von außen in der Gehäuseplatte 50 integrierte Bedieneinrichtung 58 zur Bedienung des Klimaprüfgerätes 15 sowie einen Schaltschrank 59 unterhalb der Bedieneinrichtung 58. Der Schaltschrank 59 weist eine hier nicht näher dargestellte Steuereinrichtung, Mittel zur Datenverarbeitung und eine Spannungsversorgung auf. Der Schaltschrank 59 ist mittels Scharnieren 60 zwischenliegend den Gehäuseplatten 46 und 47 teilbar ausgebildet, d. h. ein schwenkbarer Teil 61 kann relativ zu einem festen Teil 62 der Steuerung 38 so verschwenkt werden, dass die Steuerung 38 öffenbar ist und sowohl der schwenkbare Teil 61 als auch der feste Teil 62 zugänglich werden. Die Steuerung 38 ist daher allein mit dem festen Teil 62 an dem Rahmenträger 19 bzw. an den Rahmenprofilen 20 fest montiert.

## Patentansprüche

1. Klimaprüfgerät (10, 15), insbesondere Korrosionsprüfgerät oder dergleichen, umfassend ein Prüfkammermodul (11, 16) mit einem gegenüber einer Umgebung abschließbaren Prüfraum (36) zur Aufnahme von Prüflingen, ein Tankmodul (12) mit einem Behälter (37) zur Aufnahme einer korrosiven Flüssigkeit, ein Steuermodul (13) mit einer Steuerung (38) zur Durchführung eines Prüfzyklus, und eine Gehäuseanordnung (14, 17) zur zumindest teilweisen Aufnahme des Prüfraums, des Behälters und der Steuerung,
wobei das Klimaprüfgerät eine Rahmenanordnung (18) umfasst, wobei die Rahmenanordnung aus voneinander beabstandeten parallelen Rahmenträgern (19) und Rahmenprofilen (20) ausgebildet ist, und wobei die Rahmenprofile die Rahmenträger miteinander verbinden, **dadurch gekennzeichnet,**
**dass** die Rahmenprofile und die Rahmenträger räumlich getrennte Modulaufnahmen (33, 34, 35) für jeweils den Prüfraum, den Behälter und die Steuerung ausbilden,
**dass** der Rahmenträger (19) aus einem Kunststoffmaterial einstückig ausgebildet ist,
**dass** der Rahmenträger (19) aus vertikalen Trägern (24, 25) und horizontalen Trägern (22, 23) ausgebildet ist, und
**dass** in den Trägern (22, 23, 24, 25) Durchgangsöffnungen (30) ausgebildet sind, wobei in zumindest einer Durchgangsöffnung ein Rahmenprofil (20) formschlüssig eingesetzt ist.

2. Klimaprüfgerät nach Anspruch 1,
**dadurch gekennzeichnet,**
**dass** die Rahmenanordnung (18) den Prüfraum (36), den Behälter (37), die Steuerung (38) und/oder die Gehäuseanordnung (14, 17) haltert.

3. Klimaprüfgerät nach Anspruch 1 oder 2,
**dadurch gekennzeichnet,**
**dass** die Rahmenträger (19) derart angeordnet sind, dass die Rahmenträger den Prüfraum (36), den Behälter (37) und die Steuerung (38) räumlich voneinander trennen.

4. Klimaprüfgerät nach Anspruch 1,
**dadurch gekennzeichnet,**
**dass** der Rahmenträger (19) einen Schaumkern aufweist und/oder das Kunststoffmaterial faserverstärkt ist.

5. Klimaprüfgerät nach einem der vorangehenden Ansprüche,
**dadurch gekennzeichnet,**
**dass** der Rahmenträger (19) als ein Fachwerk ausgebildet ist.

6. Klimaprüfgerät nach Anspruch 1,
**dadurch gekennzeichnet,**
**dass** an einen Träger (23) Fußfortsätze (27) angeformt sind, wobei an den Fußfortsätzen jeweils eine Einstelleinrichtung zur horizontalen Ausrichtung der Rahmenanordnung (18) angeordnet ist.

7. Klimaprüfgerät nach einem der vorangehenden Ansprüche,
**dadurch gekennzeichnet,**
**dass** das Rahmenprofil (20) ein Metall-Strangpressprofil ist.

8. Klimaprüfgerät nach einem der vorangehenden Ansprüche,
**dadurch gekennzeichnet,**
**dass** die Gehäuseanordnung (14, 17) Gehäuseplatten (34, 35, 36, 37, 38, 39, 40, 41, 42, 43, 44, 45, 46, 47, 48, 49, 50) umfasst, die an den Rahmenträgern (19) befestigt sind, wobei die Gehäuseplatten in ihren Abmessungen an Abmessungen der Modulaufnahmen (33, 34, 35) angepasst sind.

9. Klimaprüfgerät nach Anspruch 8,
**dadurch gekennzeichnet,**
**dass** die Gehäuseplatte (34, 35, 36, 37, 38, 39, 40, 41, 42, 43, 44, 45, 46, 47, 48, 49, 50) einen Schaumkern (51) aufweist.

10. Klimaprüfgerät nach Anspruch 8 oder 9,
**dadurch gekennzeichnet,**
**dass** in der Gehäuseplatte (34, 35, 36, 37, 38, 39, 40, 41, 42, 43, 44, 45, 46, 47, 48, 49, 50) Befestigungsmittel (52) formschlüssig eingelassen sind, und dass an dem Rahmenträger (19) Befestigungsaufnahmen (53) für die Befestigungsmittel ausgebildet sind.

11. Klimaprüfgerät nach einem der vorangehenden Ansprüche,
**dadurch gekennzeichnet,**
**dass** der Prüfraum (36) als eine Wanne (54) oder Truhe mit einem verschließbaren Prüfraumdeckel (55) ausgebildet ist.

12. Klimaprüfgerät nach Anspruch 11,
**dadurch gekennzeichnet,**
**dass** die Wanne (54) oder Truhe Lagerfortsätze (56) aufweist, die auf den Rahmenprofilen (20) aufliegen.

13. Klimaprüfgerät nach einem der vorangehenden Ansprüche,
**dadurch gekennzeichnet,**
**dass** der Behälter (37) Rollen (57) aufweist, wobei der Behälter mittels der Rollen auf einem Untergrund fahrbar ist.

14. Klimaprüfgerät nach einem der vorangehenden Ansprüche,
**dadurch gekennzeichnet,**
**dass** das Steuermodul (13) allein an einem Rahmenträger (19) befestigt und um eine Hochachse zumindest in Teilen schwenkbar ausgebildet ist.

15. Klimaprüfgerätebausatz zur Ausbildung eines Klimaprüfgerätes (10, 15) nach einem der vorangehenden Ansprüche, umfassend ein Prüfkammermodul (11, 16) mit einem Prüfraum (36), ein Tankmodul (12) mit einem Behälter (37), ein Steuermodul (13) mit einer Steuerung (38), drei Rahmenträger (19) und vier Rahmenprofile (20), wobei eine Länge der Rahmenträger so bemessen ist, dass der Prüfraum und der Behälter jeweils zwischen Rahmenträgern anordbar ist, wobei die Steuerung an einem Rahmenträger anordbar ist, wobei jeder Rahmenträger aus einem Kunststoffmaterial einstückig ausgebildet ist, jeder Rahmenträger aus vertikalen Trägern und horizontalen Trägern ausgebildet ist, und in den Trägern Durchgangsöffnungen ausgebildet sind, wobei in zumindest einer Durchgangsöffnung ein Rahmenprofil formschlüssig einsetzbar ist.

## Claims

1. A climate testing device (10, 15), in particular a corrosion testing device or the like, comprising a test-chamber module (11, 16) having a test space (36) which can be closed off from the surroundings and which serves to receive test specimens, a tank module (12) having a container (37) for receiving a corrosive liquid, a control module (13) having a controller (38) for carrying out a test cycle, and a housing assembly (14, 17) for at least partially accommodating the test space, the container and the controller, the climate testing device comprising a frame assembly (18), the frame assembly being formed by spaced-apart parallel frame carriers (19) and frame profiles (20), the frame profiles interconnecting the frame carriers,
**characterized in that**
the frame profiles and the frame carriers form spatially separate module seats (33, 34, 35) for the test space, the container and the controller, the frame carrier (19) is formed in one piece from a plastic material, the frame carrier (19) is composed of vertical beams (24, 25) and horizontal beams (22, 23), and passage openings (30) are formed in the beams (22, 23, 24, 25), a frame profile (20) being form-fittingly inserted into at least one passage opening.

2. The climate testing device according to claim 1,
**characterized in that**
the frame assembly (18) supports the test space (36), the container (37), the controller (38) and/or the housing assembly (14, 17).

3. The climate testing device according to claim 1 or 2, **characterized in that**
the frame carriers (19) are disposed in such a manner that the frame carriers spatially separate the test space (36), the container (37) and the controller (38) from one another.

4. The climate testing device according to claim 1,
**characterized in that**
the frame carrier (19) has a foam core and/or the plastic material is fiber-reinforced.

5. The climate testing device according to any one of the preceding claims,
**characterized in that**
the frame carrier (19) is formed as a truss.

6. The climate testing device according to claim 1,
**characterized in that**
foot protrusions (27) are molded to one beam (23), an adjusting device for horizontally aligning the frame assembly (18) being disposed on each foot protrusion.

7. The climate testing device according to any one of the preceding claims,
**characterized in that**
the frame profile (20) is an extruded metal profile.

8. The climate testing device according to any one of the preceding claims,
**characterized in that**
the housing assembly (14, 17) comprises housing plates (34, 35, 36, 37, 38, 39, 40, 41, 42, 43, 44, 45, 46, 47, 48, 49, 50) which are attached to the frame carriers (19), the dimensions of the housing plates matching dimensions of the module seats (33, 34, 35).

9. The climate testing device according to claim 8,
**characterized in that**
the housing plate (34, 35, 36, 37, 38, 39, 40, 41, 42, 43, 44, 45, 46, 47, 48, 49, 50) has a foam core (51).

10. The climate testing device according to claim 8 or 9,
**characterized in that**
attachment means (52) are form-fittingly embedded in the housing plate (34, 35, 36, 37, 38, 39, 40, 41, 42, 43, 44, 45, 46, 47, 48, 49, 50) and that attachment sockets (53) for the attachment means are formed on the frame carrier (19).

11. The climate testing device according to any one of the preceding claims,
**characterized in that**
the test space (36) is formed as a vat (54) or chest having a closable test space lid (55).

12. The climate testing device according to claim 11,
**characterized in that**
the vat (54) or chest has bearing protrusions (56) which rest on the frame profiles (20).

13. The climate testing device according to any one of the preceding claims,
**characterized in that**
the container (37) has rollers (57), the container being movable on a ground by means of said rollers.

14. The climate testing device according to any one of the preceding claims,
**characterized in that**
the control module (13) is attached to one frame carrier (19) on its own and is configured to be pivotable, at least in part, about a vertical axis.

15. A climate testing device kit for forming a climate testing device (10, 15) according to any one of the preceding claims, the climate testing device kit comprising a test-chamber module (11, 16) having a test space (36), a tank module (12) having a container (37), a control module (13) having a controller (38), three frame carriers (19) and four frame profiles (20), a length of the frame carriers being dimensioned such that the test space and the container can each be disposed between frame carriers, the controller being disposable on one frame carrier, each frame carrier being formed in one piece from a plastic material, each frame carrier being composed of vertical beams and horizontal beams, and passage openings being formed in the beams, a frame profile being form-fittingly insertable into at least one passage opening.

## Revendications

1. Dispositif d'essai climatique (10, 15), notamment un dispositif d'essai de corrosion ou d'autre choses semblables, comprenant un module de chambre d'essai (11, 16) ayant un espace d'essai (36) qui peut être fermé par rapport aux environs et qui sert à recevoir des éprouvettes, un module de cuve (12) ayant un récipient (37) pour recevoir un liquide corrosive, un module de commande (13) ayant un dispositif de commande (38) pour effectuer un cycle d'essai et un ensemble boîtier (14, 17) pour loger, au moins en partie, l'espace d'essai, le récipient et le dispositif de commande, le dispositif d'essai climatique comprenant un ensemble cadre (18), l'ensemble cadre étant formé par des supports de cadre (19) parallèles et espacés et par des profilés de cadre (20), les profilés de cadre reliant les supports de cadre,
**caractérisé en ce que**
les profilés de cadre et les supports de cadre forment des logements de module (33, 34, 35) séparés pour l'espace d'essai, le récipient et le dispositif de commande, le support de cadre (19) est formé d'un seul tenant à partir d'une matière plastique, le support de cadre (19) se compose de supports verticaux (24, 25) et de supports horizontaux (22, 23) et des ouvertures de passage (30) sont formées dans les supports (22, 23, 24, 25), un profilé de cadre (20) étant inséré dans au moins une ouverture de passage par engagement positif.

2. Dispositif d'essai climatique selon la revendication 1, **caractérisé en ce que**
l'ensemble cadre (18) supporte l'espace d'essai (36), le récipient (37), le dispositif de commande (38) et/ou l'ensemble boîtier (14, 17).

3. Dispositif d'essai climatique selon la revendication 1 ou la revendication 2,
**caractérisé en ce que**
les supports de cadre (19) sont disposés de telle manière que les supports de cadre séparent spatialement l'espace d'essai (36), le récipient (37) et le dispositif de commande (38) l'un de l'autre.

4. Dispositif d'essai climatique selon la revendication 1, **caractérisé en ce que**
le support de cadre (19) a un noyau en mousse et/ou la matière plastique est renforcée par des fibres.

5. Dispositif d'essai climatique selon l'une quelconque des revendications précédentes,
**caractérisé en ce que**
le support de cadre (19) est configuré comme treillis.

6. Dispositif d'essai climatique selon la revendication 1, **caractérisé en ce que**
des saillies de pied (27) sont moulées sur un support (23), un dispositif d'ajustement pour aligner horizontalement l'ensemble cadre (18) étant disposé sur chaque saillie de pied.

7. Dispositif d'essai climatique selon l'une quelconque des revendications précédentes,
**caractérisé en ce que**
le profilé de cadre (20) est un profilé extrudé en métal.

8. Dispositif d'essai climatique selon l'une quelconque des revendications précédentes,
**caractérisé en ce que**
l'ensemble boîtier (14, 17) comprend des plaques de boîtier (34, 35, 36, 37, 38, 39, 40, 41, 42, 43, 44, 45, 46, 47, 48, 49, 50) qui sont raccordées aux supports de cadre (19), les dimensions des plaques de boîtier étant adaptées aux dimensions des logements de module (33, 34, 35).

9. Dispositif d'essai climatique selon la revendication 8, **caractérisé en ce que**
la plaque de boîtier (34, 35, 36, 37, 38, 39, 40, 41, 42, 43, 44, 45, 46, 47, 48, 49, 50) a un noyau (51) en mousse.

10. Dispositif d'essai climatique selon la revendication 8 ou la revendication 9,
**caractérisé en ce que**
des moyens de fixation (52) sont encastrés dans la plaque de boîtier (34, 35, 36, 37, 38, 39, 40, 41, 42, 43, 44, 45, 46, 47, 48, 49, 50) par engagement positif et **en ce que** des logements de fixation (53) pour les moyens de fixation sont formés sur le support de cadre (19).

11. Dispositif d'essai climatique selon l'une quelconque des revendications précédentes,
**caractérisé en ce que**
l'espace d'essai (36) est formé comme bac (54) ou comme coffre ayant un couvercle d'espace d'essai (55) fermable.

12. Dispositif d'essai climatique selon la revendication 11, **caractérisé en ce que**
le bac (54) ou le coffre a des saillies de palier (56) qui reposent sur les profilés de cadre (20).

13. Dispositif d'essai climatique selon l'une quelconque des revendications précédentes,
**caractérisé en ce que**
le récipient (37) a des rouleaux (57), le récipient étant mobile par terre au moyen des rouleaux.

14. Dispositif d'essai climatique selon l'une quelconque des revendications précédentes,
**caractérisé en ce que**
le module de commande (13) est fixé seulement à un support de cadre (19) et il est configuré de manière à être pivotable, au moins en partie, autour d'un axe vertical.

15. Kit de dispositif d'essai climatique pour former un dispositif d'essai climatique (10, 15) selon l'une quelconque des revendications précédentes, le kit de dispositif d'essai climatique comprenant un module de chambre d'essai (11, 16) ayant un espace d'essai (36), un module de cuve (12) ayant un récipient (37), un module de commande (13) ayant un dispositif de commande (38), trois supports de cadre (19) et quatre profilés de cadre (20), une longueur des supports de cadre étant dimensionnée de telle manière que l'espace d'essai et le récipient peuvent être disposés chacun entre des supports de cadre, le dispositif de commande pouvant être disposé sur un support de cadre, chaque support de cadre étant formé d'un seul tenant à partir d'une matière plastique, chaque support de cadre se composant de supports verticaux et de supports horizontaux et des ouvertures de passage étant formées dans les supports, un profilé de cadre pouvant être inséré dans au moins une ouverture de passage par engagement positif.
